# EUROPEAN PATENT APPLICATION

(11) **EP 4 606 653 A1**
(43) Date of publication of application: **27.08.2025**
(21) Application number: 24158861.5
(22) Date of filing: 21.02.2024
(51) Int. Cl.: B60R 16/023, H02G 3/08

(54) **SHIELDED HIGH VOLTAGE JUNCTION BOX WITH INTEGRATED PASS-THROUGH, AND METHOD FOR ASSEMBLING IT**

(71) Applicant: Aptiv Technologies AG, 8200 Schaffhausen (CH)
(72) Inventor: GUILLANTON, Erwan, 28230 Épernon (FR); TRICHARD, Laurent, 28230 Épernon (FR)
(74) Representative: INNOV-GROUP

(57) **Abstract**

Present disclosure relates to a high voltage junction box for connections of shielded cables (59), comprising a conductive shielding shell (12,14) that includes at least one internal shield part (15,191) connected with cable shielding envelopes (592) of said cables. Its main housing (11) and its cable pass-through parts (111) are preferably a one-piece element, notably injected plastic, and the internal shield is connected with the cable shield (592) by metallic dowels (162) passing through the main housing (11).

In an embodiment (1), the internal shield part is a local plate (15), that is connected by a pass-through plug or bolt to an external metallic shell that encases main housing (11) and closing cover (13).

Another embodiment (1') comprises an internal full shielding shell, with two parts encased within the main housing and closing cover.

Disclosure also relates to a method for assembling said junction box with the cable shielding envelopes.

## Description

The present disclosure relates to a shielded high voltage junction box, and to the field of high voltage battery operated systems, especially electric vehicles.

Electric vehicles are more and more powered by large battery banks, made of strings of batteries in series that can achieve operating voltages called high voltages, higher than 48V and currently often around 400V, and sometimes higher than 800V, with a current possibly up to 400A or 500A, mostly in direct current. Such voltages are typically ranging up to 1500V or 2000V, or up to 4000V.

Within the vehicle, battery terminal, traction motor and some high power accessories use such a high voltage, and often also the charging system. As such high voltages pose major risks in case of misconduct, either for the systems or a human operator, specific security precautions are enforced in such system design.

Various high voltages systems are connected together through a specific junction box, called high voltage junction box (or "HVJB"), mostly one but possibly several. This junction box typically contain positive and negative high voltage connections for the battery pack, the traction motor and high power accessories, and the charging system. These high voltages are mostly made through internal busbars, and encompass power fuses. Such junction box is typically made of metal, so as to provide an electromagnetic shielding between its internal and external spaces.

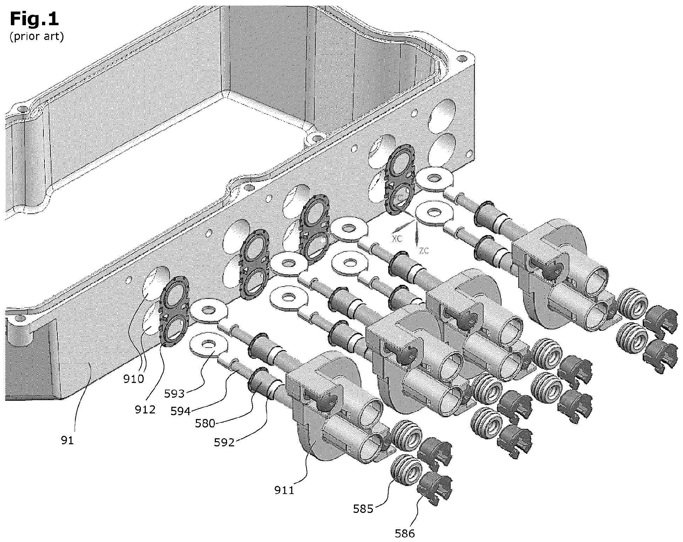

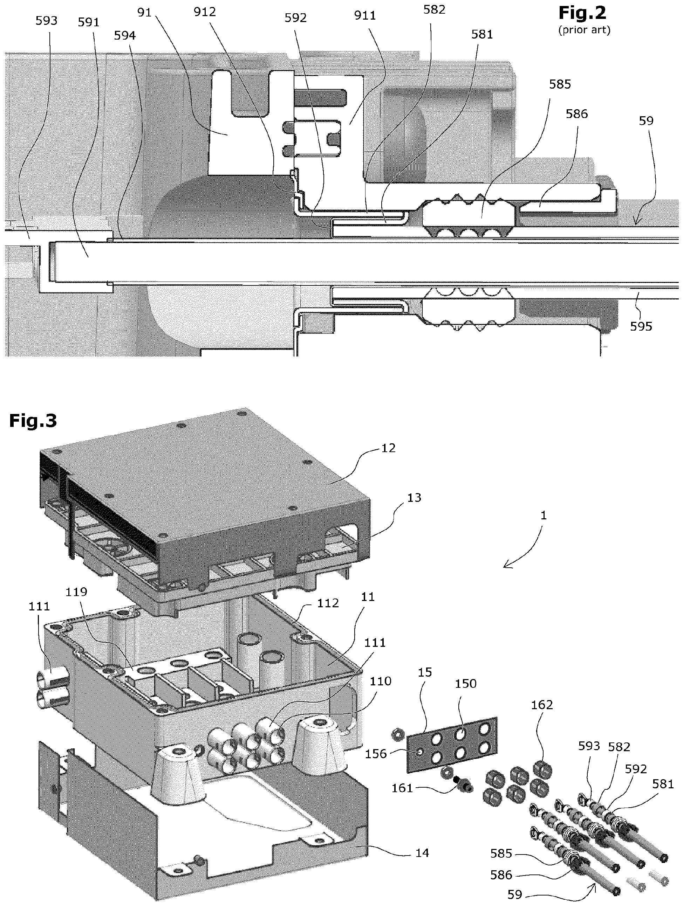

An example of such high voltage junction box is illustrated in Fig.1 and Fig.2: a main housing 91 of cast and machined aluminium alloy, contains insulating plastic supports that receive the electrical elements, such as busbars, fuses, and connection terminals 593 at the extremity of conductors 591 of the high voltage cables 59, and various other electrical elements. Said main housing 91 is closed with a sealing closing metal cover (non represented) that is screwed in electrical continuity on the main housing 91, thus completing the main housing to form a totally metallic envelope that provides an all-around electromagnetic shielding envelope.

High voltage cables 59 enter the junction box by through-openings 910 that are drilled within the walls of the main housing 91. Each of these cables 59 is fixed 586 and sealed 585 in the opening a separate pass-through part 911 made of an insulating material, which is mounted on and attached to the housing 91 in regards of this opening 910. To ensure a shielding continuity between the shielding envelope 592 of the cable 59 and the metallic housing 91 of the junction box, this conductor envelope 592 is connected with a cylindrical metal assembly 580 which is inserted within a separate metallic washer 912 that is tightened by the pass-through part 911 on the outer surface of the metallic housing 91.

One aim of the invention is to overcome some or all of the disadvantages of the prior art. More specifically, it is interesting to provide technical solutions that enable a shielding continuity between the shielding envelopes of the cables and of the box housing while offering processes that could be more flexible and/or simpler for manufacturing such junction box and/or implementing it within a system or vehicle.

Also, it is desirable to insure or even improve ergonomics and security of such a junction box, and also durability and reliability of its security systems. Also, it is desirable to provide more simplicity and rapidity, in manufacturing and maintenance, as well as simplicity and flexibility of its design, adaptation, manufacturing or servicing process. This is aimed together with keeping or improving existing performances and qualities of the prior art, or the compromises between some or all of these criteria.

### Summary of the disclosure

These objectives are achieved partially or wholly, according to the disclosure, by a device and method having the features set forth in the claims. The claims form an integral part of the technical instruction provided herein in connection with the disclosure.

In this context it is disclosed a high voltage junction box as defined in claim 1.

This device may also optionally include at least one of the features of any one of claims 2 to 10. It is also disclosed an autonomous electric vehicle or motorized system according to claim 11, preferably with the features of claim 12.

The disclosure also relates to a method for manufacturing such a junction box, according to claim 13, optionally with the features of any of claims 14 or 15.

Thanks to these provisions, it is enabled to have pass-through parts integrated in and manufactured one-piece with the housing structure, main and/or cover, together with manufacturing said main housing of a nonconductive material. It thus also enables to have internal support parts also integrated in and one-piece with said housing structure, such of injected plastic.

Embodiments according to claims 5 to 10 furthermore enable to arrange an internal shielding part of small size, that constitutes no or small constraint for designing a fully insulating and/or one-piece housing.

Also, embodiments according to claim 4 enable to use a main housing and/or closing cover made of an insulating material, together with outside surfaces that are potentially both insulating and of an on-demand and possibly complex shape.

Manufacturing and/or assembling processes are thus made more flexible to design or adapt and simpler to carry on.

Multiple embodiments of invention are hereby envisioned, which comprise the optional features here disclosed, according to all of their feasible combinations.

### List of drawings

Other advantages and features will become apparent on examination of the detailed description of three examples that are in no way limitative, and the attached drawings, in which:
- Fig.1 is an exploded view of the wall feedthrough of a high voltage junction box according to an exemplary prior art;
- Fig.2 is a section view of one wall feedthrough of the Fig.1;
- Fig.3 is an on scale exploded view of a high voltage junction box according to a first exemplary embodiment of the present disclosure, with a local only internal shielding part, represented without its internal electrical elements;
- Fig.4 is a detailed perspective view of the junction box of Fig.3;
- Fig.5 is a detailed perspective of a section view along the axis of one wall feedthrough of the junction box of Fig.3;
- Fig.6 is a detailed perspective of a section view along the axis of the pass-through bolt that connects internal and outside shielding parts of the junction box of Fig.3;
- Fig.7 is an on scale partial perspective of a section view of second exemplary embodiment of the present disclosure, with an internal shielding part that is totally inside the main housing and closing cover of the junction box.

### Description in reference to the drawings

In the various figures, similar or identical elements have the same references.

Fig.1 and Fig.2 illustrate a current prior art of high voltage junction box 9, with a metallic housing 91 on which are attached separated pass-through part 911, typically made of injected plastic.

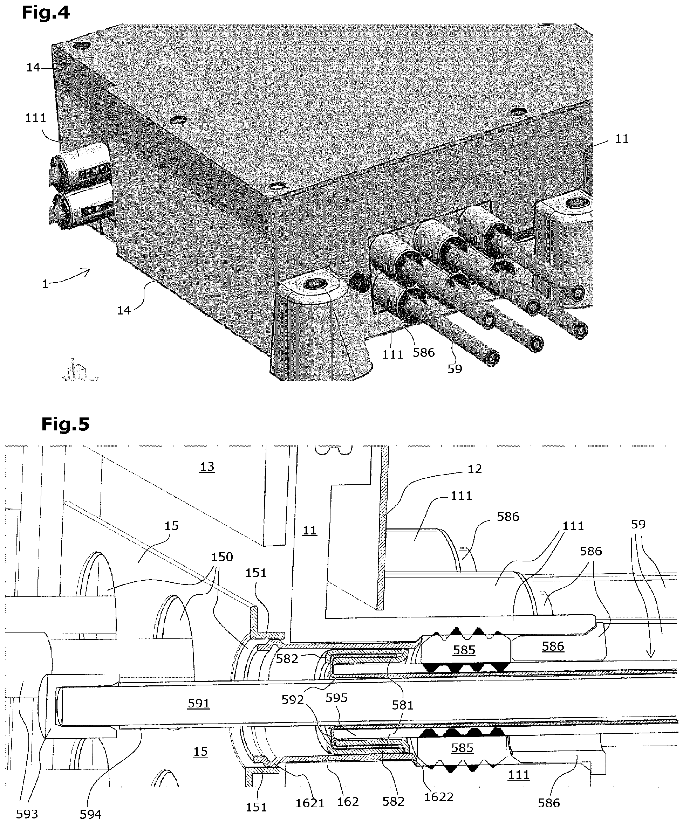

Fig.3 to Fig.6 illustrate a first exemplary embodiment of the present disclosure, with a local only internal shielding part.

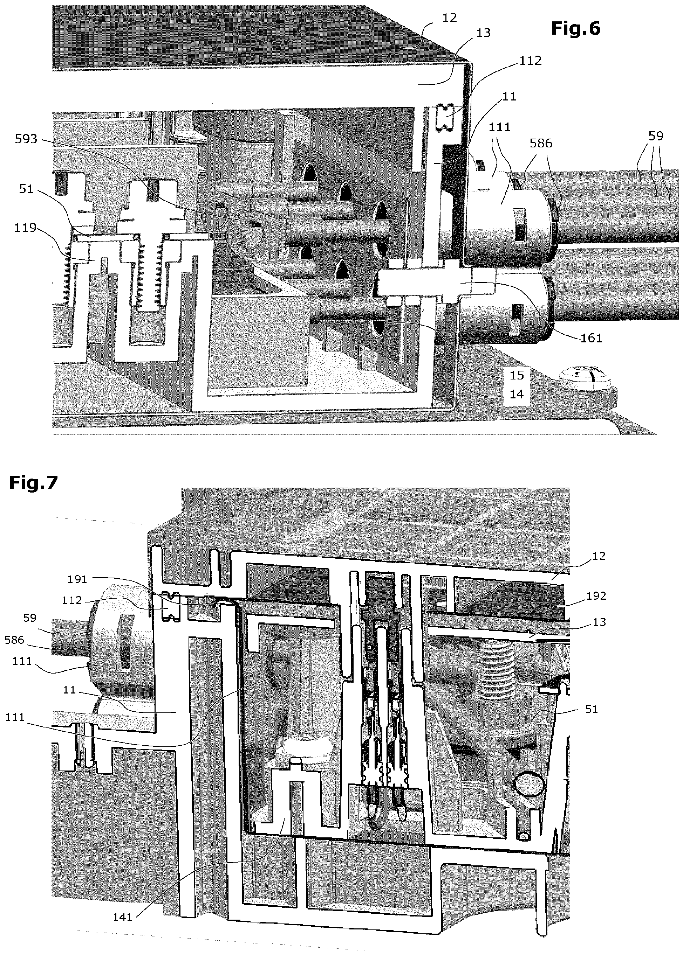

Housing structure of the junction box 1 has a watertight housing structure, here comprising a main housing 11 and a closing cover 13 assembled in a watertight manner, here with a rubber-like seal 112. Both cover 12 and main housing 11 are made of injected plastic. Such housing, here within the walls of its main housing 11, comprises protruding cylindrical extensions 111 that each surrounds a traversing opening 110, which works as a feedthrough inlet for the high voltage cables 59 that are to be connected within the junction box. As can be seen in Fig.3 and Fig.6, the main housing includes internal shapes 119, integrated and directly issued from the molding process, that provide various functions such as insulated mounting base functions for connecting busbars 51.

This watertight housing structure is enclosed within an outside shielding envelope, embodied as an external metallic shell that comprises a bottom shield part 14 and a top shield part 12 that are assembled and electrically connected together. Such top and bottom shield parts 12, 14 are for example made of stamped and folded metal sheets, possibly in a known manner. They have cutouts that leave small openings from which protrude the integrated pass-thought parts 111 of the main housing 11.

High voltage cables 59 are inserted in the through openings 110 of these 111. They are each sealed therein by a rubber-like bushing 586, and attached therein by a fixation bushing or grommet 586 which is snapped in lateral cutouts of pass-through parts 111 and can be unlocked for removal by a push and rotate movement. They can also be attached and/or sealed therein by other means, including known means.

Within the through opening 110 of the pass-through parts 111, the shielding envelope 592 of the cable 59, such as a metallic braid or sheet or film, is electrically connected with a cylindrical metal assembly. In the present example, such cylindrical metal assembly comprises a cylindrical metallic inner ferule 581, threaded around the cable (here around its external insulating layer 595). The cable shielding envelope 592 is then folded down around the inner ferule 581, before being tightened there by an outer ferule 582 that comes around the inner ferule 581 for catching the envelope 592 in-between.

A local internal local shield part 15, here made as a small metallic plate, is affixed parallel to the internal surface of the main housing wall, in regards of one or several feedthrough openings 110. It has one through opening 150 facing each of said feedthrough openings 110. As illustrated in Fig.6, this internal local shield part 15 is electrically connected with the external metallic shell, here with a pass-through bolt 161 that pass through main housing 11 wall near but outside of the pass-through parts 111.

Each through opening 150 of the internal local shielding part 15 is passed through by the conductor 591 of the corresponding cable 59 and it internal insulating layer 594. Around its internal insulating layer 594, the internal local shielding part 15 is electrically connected with a conductive pass-through cylinder or dowel 162, here by an annular bulging 161 that is forcedly inserted within a skirt 151 that rims the corresponding through opening 150 of the internal shield part 15.

Within the pass-through opening 110 of pass-through part 111, the pass-through dowel 162 is electrically connected with the cylindrical metal assembly of the cable shielding envelope, here by forcedly surrounding the outer ferule 582.

An electrical surrounding continuity is thus provided between the cable shielding envelope and the internal local shielding part 15; which itself on the one hand internally overlays the pass-through cutout of the external metallic shell, and on the other hand is electrically connected with the same external metallic shell. A shielding continuity is thus provided between the cable shielding and the junction box shielding.

Fig.7 illustrates a second exemplary embodiment of the present disclosure, that will be described only in its differences with the first exemplary embodiment.

In this embodiment, the internal shielding part is totally inside the water tight structure. It comprises a bottom shielding part made of an internal metallic receptacle 191, which mainly fits the internal surface of the main housing 11 and may be called an internal full shielding of said main housing, together with a top shielding part 192 here embodied as a mainly flat cover that closes the bottom shielding part 191. Both shielding part are assembled and electrically connected together, here by being caught and tightened between the main housing 11 and its closing cover 13.

In the same manner as in Fig.3 to Fig.6, the closing structure of the junction box 1' also comprises a main housing 11 and a closing cover 13, assembled together in a watertight manner through rubber-like seal 112. Some or all of the internal electrical elements, such as connection busbars 51, are affixed on one or several separated supporting pieces 141 that are either fixed to the full shielding part 191 or to the main housing 11 through said full shielding part. Some may also be affixed on parts of the main housing 11 that protrudes through the full shielding part 191.

The main housing 11 is also one-piece manufactured, such as of injected plastic, with integrated pass-through parts 111 that form wall feedthrough for high voltage cables 59, where the latter are also fixed 586 and sealed in the same manner.

Also in the same manner, shielding envelope of cables 59 is electrically connected with the rim of through opening 1910 of the internal full shielding 191, thus providing a shielding continuity of the cable shielding envelope with the junction box shielding envelope 191, 192.

Of course, the disclosure is not limited to the examples just described, and many adjustments can be made to these examples without departing from the scope of the disclosure.

### Nomenclature

- 1 , 1': high voltage shielded junction box
- 11: main housing of junction box - of injected plastic
- 110: through openings in pass-through parts of main housing, for inlet of high voltage cable
- 111: pass-through part of main housing
- 119: support for contained electrical elements - part of main housing
- 12: outside shielding envelope, top part
- 13: closing cover - of injected plastic
- 14: outside shielding envelope, bottom part
- 15: internal shield part - internal shielding plate
- 150: internal shield through opening - through openings of internal shielding plate
- 151: skirt of through opening of internal shielding plate
- 156: connecting opening of internal shielding plate
- 161: metallic screw or bolt - electrical connection between internal shield part and outside shielding envelope
- 162: conductive pass-through cylinder
- 1621: annular bulge for connecting pass-through cylinder with the internal shielding plate
- 1622: annular riveted rim for fixing pass-through cylinder in the pass-through part
- 191: full shielding of main housing
- 1910: opening in internal full shielding of main housing
- 192: shielding cover
- 51: busbar plate for connecting high voltage conductors
- 581: inner ferule
- 582: outer ferule
- 585: rubber sealing bushing around high voltage cable
- 586: snapped retaining bushing
- 59: high voltage cable
- 591: conductor of high voltage cable
- 592: shielding envelope of high voltage cable, e.g. braid or film
- 593: connecting terminal of high voltage cable
- 594: insulating sheath around high voltage conductor
- 595: external insulating sheath, around shielding envelope of high voltage cable
- 91: prior art - metallic main housing
- 910: prior art - inlet opening of main housing
- 911: prior art - separate pass-through part
- 912: prior art - metallic washer for connecting outer ferule with metallic main housing

## Claims

1. Junction box (1, 1') designed for, within an electrical system powered by a rechargeable electrical power source called battery, fixedly containing one or several electrical high voltage connections between electrical high voltage shielded cables (59) that may be subjected to a voltage of at least 48V, called high voltage, wherein
- said junction box comprises at least an envelope that carries out a shielding function around said connections and comprises a main housing (11) sealed by a closing cover (12), preferably watertight;
- said envelope is crossed by one or several wall feedthroughs for said high shielded voltage cables, each carried out by a pass-through part (111) secured to the main housing; and
said junction box being **characterized in that** it comprises at least one internal shield part (15) that:
- is electrically connected with a conductive shielding shell (12, 14) that surrounds said high voltage connections so as to carry out for them a shielding function, and
- is electrically connected with one or several cable shielding envelopes (592) of said high voltage shielded cables (59).

2. Device according to any the preceding claim, **characterized in that** the conductive shielding shell comprises a main shielding shell (14, 191) made of a stamped and/or folded metal sheet that encases the main housing (11), and/or a covering shielding shell (12, 192) made of a stamped and/or folded metal sheet that closes said main shielding shell, notably with one or several overlapping area in which they are fixed and electrically connected together by removable rivets or screws or bolts.

3. Device according to any one of the preceding claims, **characterized in that** the main housing (11) and one or several cable pass-through parts (111) are made as a single one-piece element.

4. Device (1') according to any one of claims 1 to 3, **characterized in that** the internal shield part comprises an internal metallic shell made of one or several parts (191, 192) encased within the main housing (11) and its closing cover (12), preferably made of a metal folded or formed sheet;
**in that** insulating supports (141) for high voltage connections are fixed within said internal shielding shell (191, 192), and secured on or through the latter; and
**in that** said internal shield shell is electrically connected with the cable shielding envelopes through the main housing (11) and the pass-through parts (111) by one or several metallic tubes or dowels (162).

5. Device (1) according to any one of claims 1 to 3, **characterized in that** the shielding envelope comprises an external metallic shell made of one or several parts (12, 14) that encase the main housing (11) and the closing cover (12);
**in that** she has an internal shield part (15) that is electrically connected with the cable shielding envelopes (592), through the main housing (11) and the pass-through parts (111), by one or several metallic connectors such as tubes or dowels (162); and
**in that** said internal shield part (15) is connected with said external metallic shell (12, 14) through the main housing (11) by at least one conductive through part (161), such as a through dowel or through bolt, possibly outside the footprint of the cable wall feedthroughs (110).

6. Device according to the preceding claim, **characterized in that** the internal shield part (15) comprise a metal plate situated against an inside part of a main housing wall that bears one or several pass-through parts (111),
**in that** said plate comprises several internal shield through-openings (150) that correspond to said pass-through parts (111),
and **in that** said plate is in conductive contact, for each of said through opening, with a conductive pass-through cylinder (162) that is or is to be inserted within said pass-through parts (111) so as to be in conductive contact, directly or indirectly, with a cable shielding envelope (592) of a high voltage cable (591) that is or is to be entering the junction box through said pass-through parts.

7. Device according to the preceding claim, **characterized in that** at least one pass-through metal cylinder (162)
- comprises an external and annular bulge (1621) or beading that is forcedly inserted into an internal shield through opening (150) or into a skirt (151) that protrudes from said internal shield through opening; so as to ensure its electrical connection with said internal shield part (15); and/or
- is riveted within the main housing (11) and its pass-through part (111) by:
∘ at a first extremity, notably an inner extremity oriented inside of the junction box, an external protrusion (1621) that comes in abutment with the main housing or its pass-through part, and
∘ at a second extremity, notably an outer extremity oriented outside of the junction box, a rim (1622) that is plastically enlarged so as to come in abutment with a shoulder of the main housing openings or its pass-through part (111).

8. Device according to any one of claims 5 to 7, **characterized in that** the external shielding shell comprises a metallic shell that includes a main shielding shell (14) that encases the main housing (11) and is electrically connected to the internal shielding part (15) by at least a metallic screw or bolt (161) that passes through said main housing.

9. Device according to any one of the preceding claims, **characterized in that** the main housing (11) is made of an insulating material, notably of injected plastic.

10. Device according to any one of claims 1 or 5 to 9, **characterized in that** the high voltage junction box comprises:
- a one-piece injected plastic main housing (11, 111) that has:
∘ an access opening arranged for accessing to internal high voltage elements (51),
∘ an internal face the shape (119) of which is arranged for fixedly receiving one or several electrical elements (51),
∘ one or several feedthroughs walls in which one or several inlet openings (110) are each arranged for receiving in a sealed (112) manner one of the high voltage shielded cables (59), thus forming an integrated pass-through part (111);
o at least one internal metallic shield part (15) fixed along said feedthrough wall around its inlet openings (110) and electrically connected through said inlet openings (110) with a cable shielding envelope (592) of said high voltage cable (59);
- a closing cover (13) made of an insulating material and arranged for closing said access opening of main housing (11);
- an external metallic shell comprising at least a bottom shield part (14) and a top shield part (12) that are assembled and electrically connected together so as to encase the main housing (11) and the closing cover (12) and thus providing a shielding envelope for them; and
- a conductive through part, such as a metallic through dowel or through bolt (161), that is electrically connected through the main housing (11):
∘ on the one hand to the internal shield part (15), and
∘ on the other hand to at least the bottom shield part (14) and/or the top shield part (12), possibly outside the footprint of the cable wall feedthroughs.

11. Autonomous electric vehicle or motorized system energized through power supplying electrical cables from with a rechargeable electrical power source, called battery,
**characterized in that** it comprises at least one electrical junction box (1) according to any one of the preceding claims, that contains one or several electrical connections (591) between at least two of said power supplying electrical cables (51, 52, 53).

12. Vehicle or system according to the preceding claim, **characterized in that** its battery subjects said connected cables (51, 52, 53) to a voltage of at least 48V, for example more than 100V, notably more than 200V; and less than 4000V, for example less than 2000V, notably less than 1000V; notably operated in direct current.

13. Method for assembling a high voltage junction box (1, 1') according to any one of claims 1 to 10, **characterized in that** it comprises one or several operation of inserting in it a high voltage shielded cable (59) to be connected within said junction box, said operation comprising the following steps, in this order or in another order:
- connecting at least one pass-through metal cylinder (162) with a cable shielding envelope (592) of said shielded high voltage cable (59), by inserting said pass-through metal cylinder around a conductor (591) of said cable;
- inserting said shielded high voltage cable (59) into the main housing (11) of said junction box through one of its pass-through parts (111), so as to enable its conductor (591) to be connected within said junction box;
- connecting said pass-through metal cylinder (162) with the internal shield part (15, 191) of the main housing (11).

14. Method according to the preceding claim, **characterized in that** the operation of connecting the pass-through metal cylinder (162) with a cable shielding envelope (592) comprises the following steps:
- inserting a first metallic cylinder, called inner ferule (581), around a stripped cable shielding envelope (592), such as a braid or sheet, of a shielded high voltage cable (59); and
- inserting a second metallic cylinder, called outer ferule (582), around said inner ferule (581), so as to catch a part of said cable shielding envelope (592) between said inner ferule and said outer ferule, so as to electrically connect said cable shielding envelope (592) with said outer ferule (582).

15. Method according to the preceding claim, **characterized in that** the operation of connecting the pass-through metal cylinder with the internal shield part of the main housing part comprises the following operations, in this order or another order:
- inserting said pass-through metal cylinder within an inlet opening of a pass-through part of the main housing;
- inserting said pass-through metal cylinder through an internal shield through opening of a metal plate of the internal shield part, said internal shield through opening facing said inlet opening, thus electrically connecting said pass-through metal cylinder with said internal shielding part;
- inserting said shielded high voltage cable into the main housing of said junction box through said pass-through part,
- inserting said pass-through metal cylinder around said outer ferule, thus electrically connecting said pass-through metal cylinder with the cable shielding envelope;
thus electrically connecting said internal shielding part with said cable shielding envelope.
